# EUROPEAN PATENT APPLICATION

(11) **EP 2 827 223 A1**
(43) Date of publication of application: **21.01.2015**
(21) Application number: 13761982.1
(22) Date of filing: 12.03.2013
(51) Int. Cl.: G06F 3/01, B60K 37/06, B60R 16/02, G01C 21/36, G06F 3/041

(54) **GESTURE INPUT OPERATION PROCESSING DEVICE**

(30) Priority: 15.03.2012 JP 2012059286
(71) Applicant: Panasonic Corporation, Kadoma-shi, Osaka 571-8501 (JP)
(72) Inventor: OKOHIRA, Takashi, Osaka 540-6207 (JP); NAKAI, Jun, Osaka 540-6207 (JP)
(74) Representative: Vigand, Philippe
(86) International application number: PCT/JP2013/001620
(87) International publication number: WO 2013/136776

(57) **Abstract**

A gesture input operation processing device includes a touch panel that detects a position touched by an operator; a body shape input unit that captures image data related to a body shape of the operator; a control unit that detects an input operation performed by a non-contact gesture of the operator according to the image data, detects a gesture input performed by the operator to the touch panel, and associates the data from the body shape input unit with the data from the touch panel, and a storage unit that stores the association performed by the control unit and stores a type of a gesture.

## Description

### Technical Field

The present invention relates to a gesture input operation processing device.

### Background Art

In recent years, automobiles are mounted with a navigation device that displays a road map and the present position on the display screen thereof and guides the route from the present position to the destination. Such a navigation device includes a touch panel as input means that is placed on the image display unit thereof, for example, as disclosed in Patent Document 1. Furthermore, the device described in Patent Document 2 acquires the hand shape of the operator from an image taken by a camera through pattern matching, detects the hand shape, thereby permitting the operator to perform operation, and then detects a gesture serving as a time change pattern of the hand shape and the hand position of the operator, thereby interpreting the input of the operator.

### Prior Art Document

### Patent Document

Patent Document 1: JP-A-2006-285598
Patent Document 2: JP-A-2000-6687

### Summary of the Invention

### Problem that the Invention is to solve

In the case of a vehicle-mounted device, the image display unit (display) thereof is provided at a position easily visible from the driver's seat. In particular, recently, in order that the visual line movement of the driver is reduced during driving, there is a tendency, for example, that the display is provided on the instrument panel and midway between the driver's seat and the front passenger seat, and that the vehicle-mounted device is disposed away from the driver's seat. For this reason, the operator is required to largely extend his hand or to bend his upper body obliquely forward to operate the touch panel placed on the display. This is a big burden on the operator particularly when the operator performs gesture input operation through the touch panel.

Furthermore, in order that the operator performs gesture input operation in the device described in Patent Document 2, it is required that the hand of the operator is captured with a camera and that the captured hand shape or gesture is detected through pattern matching. Hence, for example, the data of the hand shape or gesture is required to be stored beforehand. Moreover, in the case that the hand shape or gesture has unique characteristics peculiar to the operator, the shape or gesture does not match the stored data. In this case, the gesture of the operator cannot be detected.

An object of the present invention is to provide a gesture input operation processing device capable of surely detect gesture input operation even if the hand shape or action of the operator has special or unique characteristics peculiar to the operator.

### Means for solving the Problem

The gesture input operation processing device according to the present invention includes a touch panel, superposed on an image display unit for displaying an image, that detects a position touched by an operator; a body shape input unit that captures a body shape of the operator as image data at the time when the operator performs gesture input operation; a control unit that detects input operation performed by a non-contact gesture of the operator according to the image data captured by the body shape input unit, and detects a gesture input performed by the operator to the touch panel, and associates the input data through the body shape input unit with the input data through the touch panel; and a storage unit that stores the association between the input data through the body shape input unit and the input data through the touch panel performed by the control unit and stores a type of a gesture.

### Advantage of the Invention

With the present invention, the gesture input operation can be surely detected even if the hand shape or action of the operator has special or unique characteristics peculiar to the operator.

### Brief Description of the Drawings

FIG. 1 is a block diagram showing the vehicle-mounted device capable of allowing gesture input operation according to an embodiment of the present invention;
FIG. 2 is a view showing an installation example of a vehicle-mounted device 10 inside a vehicle;
FIG. 3 is a view showing a state that the operator extends his hand from the driver's seat of the vehicle and performs a gesture input through the touch panel 18 of the vehicle-mounted device 10 with his five fingers;
FIG. 4 is a view showing an example of a gesture input by the operator to the touch panel 18:
FIG. 5 is a view showing a state that the operator rests his arm on an armrest 50 and is performing a non-contact gesture input to a body shape input unit 40 of the vehicle-mounted device 10;
FIG. 6 is a view showing an example of a non-contact gesture input by the operator to the body shape input unit 40;
FIG. 7 is a flow chart illustrating the input state of the vehicle-mounted device 10 that is set depending on an input through which unit is performed;
FIG. 8 is a flow chart illustrating the operation of the vehicle-mounted device 10 in a state that input through the touch panel 18 can be performed; and
FIG. 9 is a flow chart illustrating the operation of the vehicle-mounted device 10 in a state that input through the body shape input unit 40 can be performed.

### Mode for Carrying Out the Invention

A vehicle-mounted device capable of allowing gesture input operation according to an embodiment of the present invention will be described below using the drawings. However, in the following descriptions, a vehicle-mounted navigation device is taken as an example of the vehicle-mounted device capable of allowing gesture input operation. This navigation device is simply referred to as the "vehicle-mounted device".

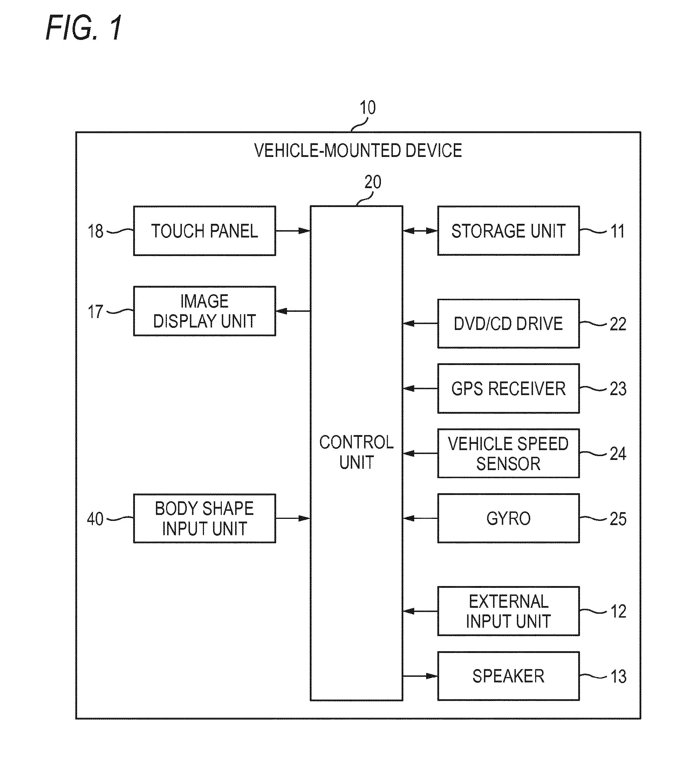

FIG. 1 is a block diagram showing the vehicle-mounted device capable of allowing gesture input operation according to an embodiment of the present invention. The vehicle-mounted device 10 according to this embodiment includes, for example, navigation functions for performing route guidance or the like and audio-visual reproduction functions for reproducing acoustic videos recorded on recording media, such as DVD (Digital Versatile Disc).

As shown in FIG. 1, the vehicle-mounted device 10 includes a storage unit 11, an external input unit 12, a speaker 13, an image display unit 17, a touch panel 18, a control unit 20, a DVD/CD drive 22, a GPS receiver 23, a vehicle speed sensor 24, a gyroscope (hereafter simply referred to as the "gyro") 25, and a body shape input unit 40. However, the DVD/CD drive 22, the GPS receiver 23, the vehicle speed sensor 24, the gyro 25, the speaker 13 and the body shape input unit 40 are not required to be accommodated integrally inside the vehicle-mounted device 10, but may be configured so as to be attachable and detachable electrically to and from the vehicle-mounted device 10. In addition, the image display unit 17 and the touch panel 18 may be integrated with each other.

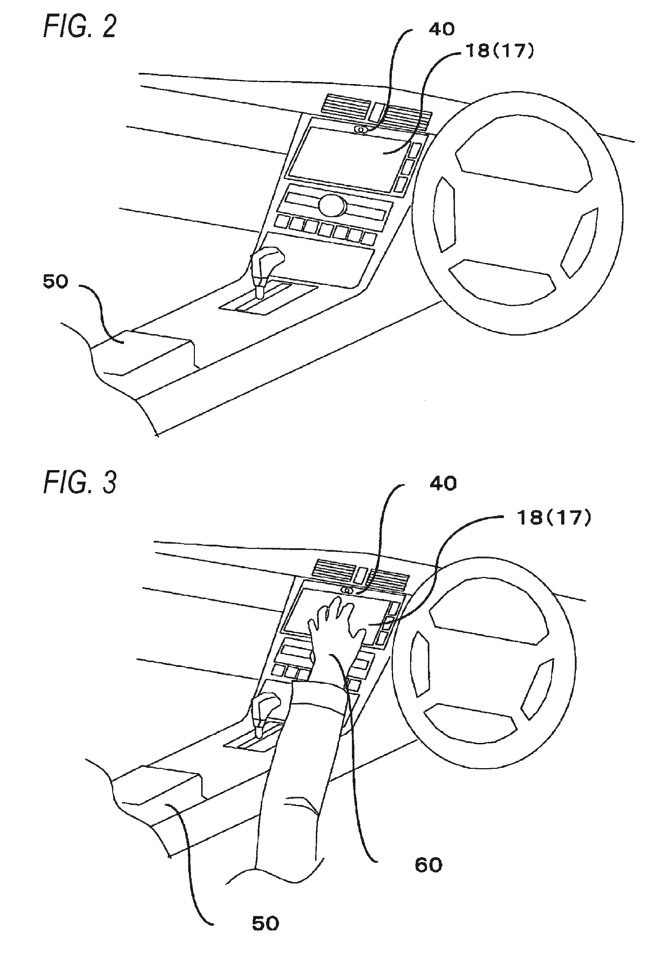

FIG. 2 is a view showing an installation example of the vehicle-mounted device 10 inside a vehicle. The vehicle-mounted device 10 is installed in the center console inside the vehicle; in the case that the operator performs input operation through the touch panel 18, the operator extends his arm and performs input operation.

The respective components of the vehicle-mounted device 10 will be described below.

The storage unit 11 is a hard disc drive (HDD), a memory card, a flash memory mounted on a printed circuit board, not shown, inside the vehicle-mounted device 10, or the like. The storage unit 11 may be formed of a single type of medium or plural types of media.

The storage unit 11 stores data (the size, display region or layout of icons) related to icons to be displayed on the image display unit 17, basic programs required for controlling the operation of the vehicle-mounted device 10, programs for controlling image display, application software programs used for the execution of the navigation functions or the execution of the audio-visual reproduction functions, and various kinds of data, such as a map database used for the navigation functions or a database of telephone numbers or the like. In addition, the storage unit 11 stores data, such as the hand shape or the number of the fingers having been input through the body shape input unit 40 or data in which the input data through the touch panel 18 is associated with the input data through the body shape input unit 40. Furthermore, like a general storage unit, the storage unit 11 is provided with a region in which, for example, various kinds of programs or various kinds of data are expanded and also provided with a region in which images are expanded.

The external input unit 12 is provided so that signals output from external devices that can be connected to the vehicle-mounted device 10 are input. The signals output from the external device are, for example, video signals and/or audio signals obtained by reproducing media, such as DVDs or CDs, or video signals and audio signals from digital TVs or the like.

The speaker 13 outputs sound processed by the vehicle-mounted device 10. The sound is, for example, a sound effect for informing the operator that the operation to the vehicle-mounted device 10 has been accepted, sound or music having been input from the external devices to the external input unit 12, or sound or music reproduced by the DVD/CD drive 22.

The image display unit 17 is a general liquid crystal display for displaying videos or images. The videos or images to be displayed on the image display unit 17 are, for example, an opening screen or a menu screen stored in the storage unit 11 or videos or still images having been input from the external devices to the external input unit 12.

The image display unit 17 has a liquid crystal panel including a polarization filter, liquid crystal, glass substrate, color filter, etc.; a backlight unit including, for example, a cold cathode tube or LEDs and a light guide plate, for use as the light source of the liquid crystal panel; electrical components, such as ICs for processing various kinds of signals for image display; and a power source unit for driving the liquid crystal panel, the backlight unit or the electrical components. The power source unit may be separated from the image display unit 17.

The touch panel 18 is a light-transmitting panel having conductivity, provided inside or on the surface of the image display unit 17. Input operation to the touch panel 18 is performed when the operator touches the position of an icon or the like displayed on the image display unit 17 with his hand or finger. By the touch operation to the position, the electrostatic capacity on the touch panel 18 is changed, and the signal indicating the change is output to the control unit 20. The position displayed on the image display unit 17 is the position of an icon or an arbitrary position on a map. In addition, the touch operation includes actions, such as moving the finger at a predetermined speed while touching the touch panel 18 and approaching the hand or finger to the touch panel 18.

The control unit 20 includes a microprocessor and an electric circuit for operating the microprocessor. The control unit 20 executes the control programs stored in the storage unit 11, thereby performing various kinds of processes. In addition, the control unit 20 displays, on the image display unit 17, videos or images obtained by the processing performed by the control unit 20. Furthermore, the control unit 20 calculates the position touched with the hand or finger of the operator on the basis of the signal from the touch panel 18. The control unit 20 collates the information corresponding to the calculated position with the information stored in the storage unit 11 and executes the function defined in an icon, menu or switch or the function defined for a gesture. Moreover, the control unit 20 extracts a body shape on the basis of the input data through the body shape input unit 40 and associates the extracted data with the data stored in the storage unit 11 or the input data through the touch panel 18. The control unit 20 may include one microprocessor or may include a plurality of microprocessors for performing respective functions, such as DVD reproduction and audio reproduction.

The DVD/CD drive 22 plays back discs on which sound sources (or audio data) and/or video sources (or video data) are stored.

The GPS receiver 23 receives signals from GPS satellite.

The vehicle speed sensor 24 detects the traveling speed of the vehicle on which the vehicle-mounted device 10 is mounted.

The gyro 25 detects the turning, the amount of the change in the vertical direction or the acceleration of the vehicle.

The body shape input unit 40 is a camera for photographing the body shape, such as the hand or fingers of the operator, when the operator performs gesture input operation. The body shape input unit 40 photographs the hand or fingers of the operator in a state that the operator rests his arm on the armrest 50 shown in FIG. 2, that is, in a state that the burden on the operator is small. The camera to be used as the body shape input unit 40 is a visible light camera, a near infrared camera, an infrared camera or an ultrasonic camera. The image data captured by the body shape input unit 40 is input to the control unit 20.

The body shape input unit 40 may be configured so as to be separated from the vehicle-mounted device 10, provided that it is connected thereto electrically. In the case of being separated, the body shape input unit 40 may be installed, for example, between the steering wheel and the window, wherein photographing can be performed in a relaxed posture, other than the state that the operator rests his arm on the armrest 50 between the driver's seat and the front passenger seat.

Input operation in the vehicle-mounted device 10 will be described below. The input operation through the touch panel 18 is performed by depressing input operation or gesture input operation. The depressing input operation is operation in which a button or icon displayed on the image display unit 17 is touched or dragged with the finger by the operator. When the depressing input operation is performed, the control unit 20 determines the input operation corresponding to the touch position on the touch panel 18. The gesture input operation is not directly related to the screen displayed on the image display unit 17, and is operation in which the operator performs a gesture by touching the touch panel 18 with a plurality of fingers and by moving the fingers sideways or by performing such an operation of rotating a rotary switch.

In this embodiment, "gesture" is a simple operation, for example, an action of moving a plurality of fingers in one direction, vertically or horizontally, or an action of moving a plurality of fingers clockwise or counterclockwise. Furthermore, "gesture input" means the input action itself performed by the gesture of the operator. "Gesture command" means a command for executing the function specified by the gesture input.

In the case of the depressing input operation, the operator simply depresses the button or icon displayed on the image display unit 17. On the other hand, in the case of the gesture input operation, the operator is required to largely extend his hand toward the touch panel 18, whereby the burden on the operator is large. In the gesture input operation, the touch positions on the touch panel 18 are not important, but the number of the fingers touched the touch panel 18 and the movements thereof are important.

In this embodiment, when the operator touches the touch panel 18 with a plurality of fingers, the control unit 20 detects that a specific gesture input performed using a plurality of fingers is started. At this time, the control unit 20 associates the hand shape (or finger shape) and the number of the fingers extracted from the data input through the body shape input unit 40 with the gesture input specified by the input through the touch panel 18. Moreover, the control unit 20 associates the data of the operation of the plurality of fingers extracted by the body shape input unit 40 with the gesture command for the specific gesture input operation stored in the storage unit 11 and then stores the data in the storage unit 11.

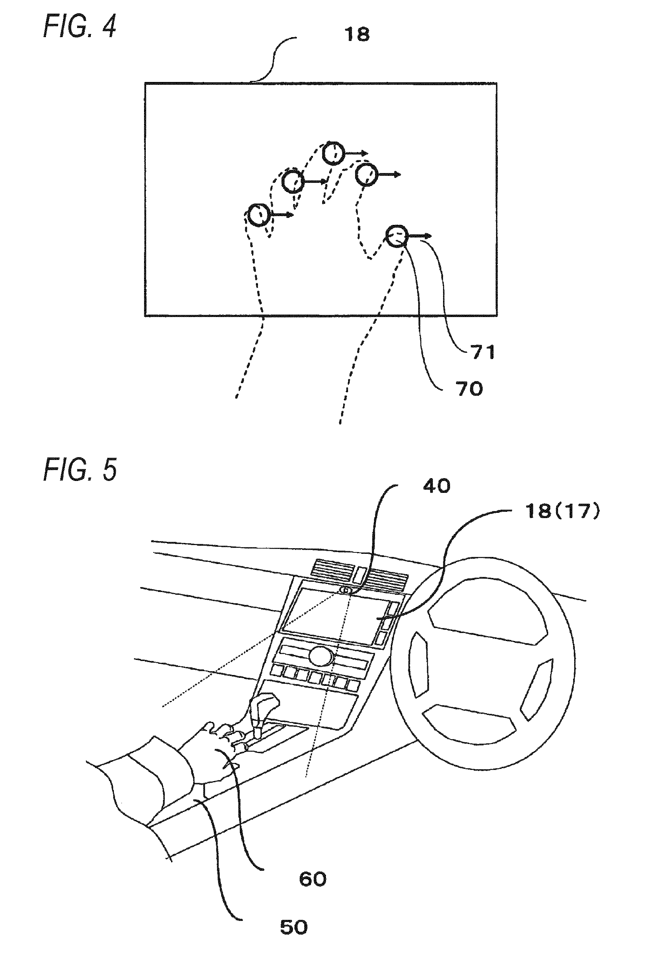

FIG. 3 is a view showing a state that the operator extends his hand from the driver's seat of the vehicle and performs a gesture input through the touch panel 18 of the vehicle-mounted device 10 with his five fingers. In addition, FIG. 4 is a view showing an example of a gesture input by the operator to the touch panel 18. In FIG. 4, the positions 70 on the touch panel 18 touched with the five fingers are shown, and the gesture input 71 using the five fingers are indicated by arrows.

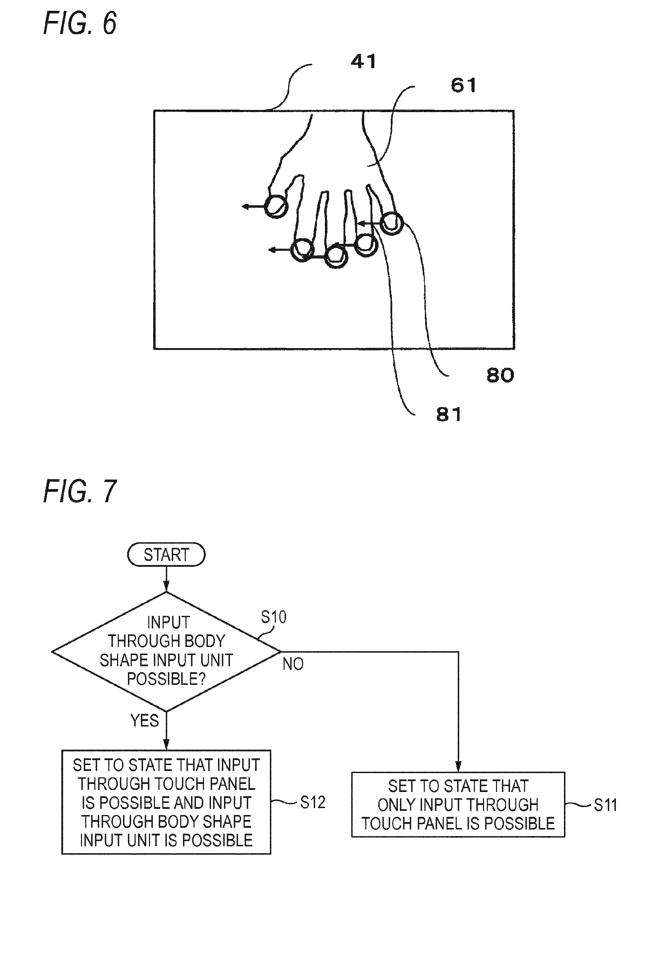

FIG. 5 is a view showing a state that the operator rests his arm on the armrest 50 and is performing a non-contact gesture input to the body shape input unit 40 of the vehicle-mounted device 10. In addition, FIG. 6 is a view showing an example of a non-contact gesture input by the operator to the body shape input unit 40. As shown in FIG. 6, the control unit 20 detects the hand shape 61 and the five fingers of the operator, including the positions 80 of the five fingers, from image data 41 input through the body shape input unit 40. In the case that the operator is in the state of resting his arm on the armrest 50 at this time, the input data through the body shape input unit 40 stabilizes continuously for a certain period of time. The control unit 20 detects the hand shape 61 and the five fingers of the operator; when the result of the detection coincides with non-contact gesture start conditions, the control unit 20 detects the time transition 81 of the position of each finger of the operator.

The above-mentioned gesture input to the touch panel 18 is associated with the non-contact gesture start conditions and the time transition 81 at the time of the non-contact gesture input to the body shape input unit 40. As shown in FIG. 5, the body shape input unit 40 is provided at a position from which the operator's hand is captured from the fingertip side thereof. For this reason, the direction of the gesture input to the touch panel 18 and the direction of the non-contact gesture input to the body shape input unit 40 are inverted vertically and horizontally.

However, the body shape input unit 40 is not necessarily installed at the above-mentioned position. Hence, the control unit 20 may perform viewpoint conversion processing for the data input through the body shape input unit 40. In the case that the viewpoint conversion processing is performed, the data is converted on the assumption that the body shape input unit 40 is located at the above-mentioned position; therefore, the control unit 20 can easily extract the hand shape and the number of the fingers of the operator, and gesture input errors are reduced.

The above-mentioned non-contact gesture start conditions may be the hand shape and the number of the fingers (singular or plural) extracted from the input data through the body shape input unit 40. In the case that the non-contact gesture start conditions are the hand shape and the number of the fingers extracted from the input data through the body shape input unit 40, non-contact gestures being different in hand shape can be distinguished, provided that the number of the fingers is the same. Hence, the non-contact gesture start conditions can be stored for respective gestures being different in the number of the plurality of fingers. For example, a three-finger gesture and a five-finger gesture are respectively associated with different non-contact gestures. As a result, the operability for the operator is improved.

The operation of the vehicle-mounted device 10 will be described below referring to FIGS. 7 to 9.

A case in which the operator operates the vehicle-mounted device 10 for the first time, or a state that the operator has not yet performed input operation, that is, a state that nothing touches the touch panel 18 and nothing has been input through the body shape input unit 40 is set as a start timing. As shown in FIG. 7, the control unit 20 judges whether the input through the body shape input unit 40 is possible (at step S10). At this time, in the case that the operator uses the vehicle-mounted device 10 for the first time or in the case that the operator has performed only input operation through the touch panel 18 but has not yet performed input operation through the body shape input unit 40, the data input through the body shape input unit 40 is not associated with the gesture command stored in the storage unit 11, whereby the control unit 20 judges that the input through the body shape input unit 40 is impossible (NO at step S10). On the other hand, in the case that the data input through the body shape input unit 40 is associated with the gesture command stored in the storage unit 11, the control unit 20 judges that the input through the body shape input unit 40 is possible (YES at step S10).

In the case that the control unit 20 judges that the input through the body shape input unit 40 is impossible at step S10 (NO at step S10), the control unit 20 sets the vehicle-mounted device 10 to the state that only the input through the body shape input unit 40 is possible (at step S11). In the case that the control unit 20 judges that the input through the body shape input unit 40 is impossible at step S10 (YES at step S10), the control unit 20 sets the vehicle-mounted device 10 to the state that both the input through the touch panel 18 and the input through the body shape input unit 40 are possible (at step S12).

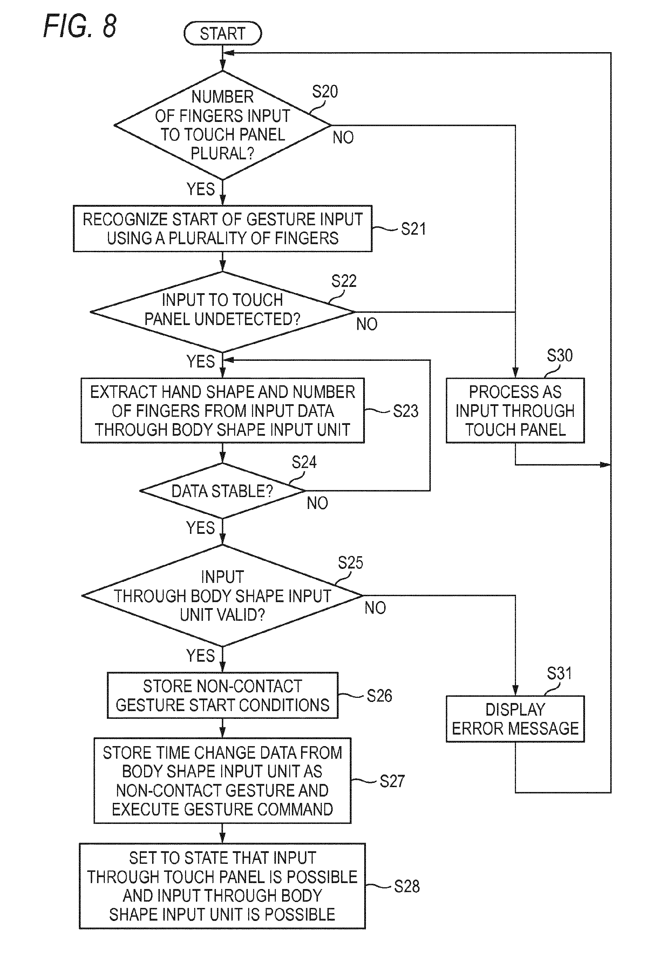

Next, the operation of the vehicle-mounted device 10 in the state that the input through the touch panel 18 is possible will be described referring to FIG. 8. The state that nothing touches the touch panel 18 and nothing has been input to the vehicle-mounted device 10 is set as the start timing.

When the operator performs input operation by touching the touch panel 18, the control unit 20 detects the number of the fingers input by the operator by touching the touch panel 18 and judges whether the number of the fingers input thereto is plural or singular (at step S20). In the case that the operator touches the touch panel 18 with a plurality of fingers, the control unit 20 judges that the number of the fingers input thereto is plural (YES at step S20) and detects that a gesture input specified by the plurality of fingers has been started (at step S21).

Next, the control unit 20 judges whether the input to the touch panel 18 is undetected or continued (at step S22). For example, in the case that, after the operator touched the touch panel 18 with a plurality of fingers, the operator stopped the touching and performed input to the body shape input unit 40 while having a posture with no burden, for example, in a state that the operator rests his arm on the armrest 50 while keeping the finger shape, the control unit 20 judges that input to the touch panel 18 is undetected (YES at step S22).

Next, the control unit 20 extracts the hand shape (or finger shape) and the number of the fingers from the data input through the body shape input unit 40 (at step S23). Then, the control unit 20 judges whether the extracted data is stable (at step S24). For example, in the case that the arm of the operator is stable, the hand shape (or finger shape) and the number of the fingers extracted from the input data through the body shape input unit 40 are maintained continuously for a certain period of time. At this time, the control unit 20 judges that the data extracted from the input data through the body shape input unit 40 is stable (YES at step S24). On the other hand, in the case that the control unit 20 judges that the extracted data is not stable (NO at step S20), the processing returns to step S23.

After judging that the data is stable at step S24, the control unit 20 judges whether the input through the body shape input unit 40 is valid or invalid (at step S25). For example, in the case that the number of the fingers extracted from the data input through the body shape input unit 40 is plural, the control unit 20 judges that the input through the body shape input unit 40 is valid (YES at step S25). Next, the control unit 20 associates the hand shape (or finger shape) and the number of the fingers extracted at step S23 with a specific gesture input to the touch panel 18 and stores the data as non-contact gesture start conditions in the storage unit 11 (at step S26).

Next, the control unit 20 associates the data of the movement (time change) of the fingers of the operator extracted from the input data through the body shape input unit 40 with a gesture command that can be executed by a specific gesture input to the touch panel 18 and stores the data as a non-contact gesture in the storage unit 11 and executes the gesture command (at step S27). Then, the control unit 20 sets the vehicle-mounted device 10 to the state that both the input through the touch panel 18 and the input through the body shape input unit 40 are possible (at step S28).

On the other hand, at step S20, in the case that, when the operator performed input operation by touching the touch panel 18, the control unit 20 judges that the number of the fingers input thereto is singular (NO at step S20), the processing advances to step S30. Furthermore, in the case that the control unit 20 judges that the input to the touch panel 18 continues at step S22 (NO at step S22), the processing also advances to step S30. At step S30, the control unit 20 processes the input as a general gesture input using a plurality of fingers to the touch panel 18, such as the execution of the gesture command allocated to the touched position. After step S30, the processing returns to step S20.

Furthermore, at step S25, in the case that the control unit 20 judges that the input through the body shape input unit 40 is invalid (NO at step S25), the processing advances to step S31. At step S31, the control unit 20 displays an error message on the image display unit 18. After step S31, the processing returns to step S20.

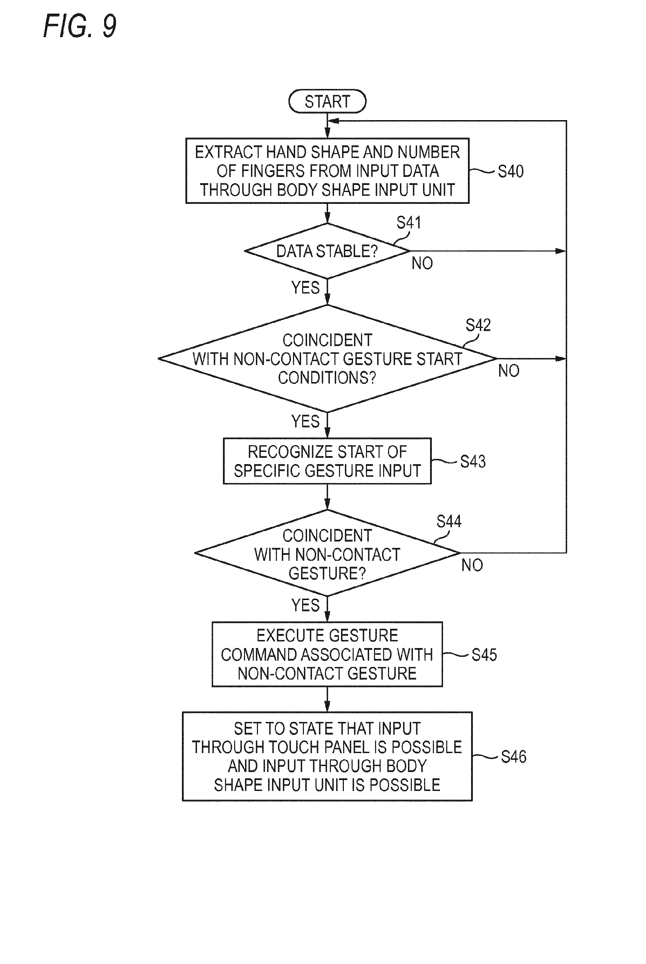

Next, the operation of the vehicle-mounted device 10 in the state that the input through the body shape input unit 40 is possible will be described referring to FIG. 9. The state that nothing has been input through the body shape input unit 40 is set as the start timing.

The control unit 20 extracts the hand shape (or finger shape) and the number of the fingers from the data input through the body shape input unit 40 (at step S40). Then, the control unit 20 judges whether the extracted data is stable (at step S41). For example, in the case that the arm of the operator is stable, the hand shape (or finger shape) and the number of the fingers extracted from the input data through the body shape input unit 40 are maintained continuously for a certain period of time. At this time, the control unit 20 judges that the data extracted from the data input through the body shape input unit 40 is stable (YES at step S41). On the other hand, in the case that the control unit 20 judges that the extracted data is not stable (NO at step S41), the processing returns to step S40.

After judging that the data is stable at step S41, the control unit 20 judges whether the hand shape (or finger shape) and the number of the fingers extracted at step S40 coincide with the non-contact gesture start conditions stored in the storage unit 11 (at step S42). In the case that the control unit 20 judges that the hand shape (or finger shape) and the number of the fingers extracted coincide with the non-contact gesture start conditions (YES at step S42), the control unit 20 detects that a specific gesture input associated with the non-contact gesture start conditions has been started (at step S43). On the other hand, in the case that the control unit 20 judging that the hand shape (or finger shape) and the number of the fingers extracted do not coincide with the non-contact gesture start conditions (NO at step S42), the processing returns to step S40.

After step S43, the control unit 20 judges whether the data of the movement (time change) of the fingers of the operator extracted from the input data through the body shape input unit 40 coincide with the time change data of the operator's finger movement stored as the non-contact gesture in the storage unit 11 (at step S44). In the case that the control unit 20 judges that these data are coincident with each other (YES at step S44), the control unit 20 executes a gesture command that can be executed by the specific gesture input associated with the non-contact gesture (at step S45). On the other hand, in the case that the control unit 20 judges that there is no coincidence in the above-mentioned data (NO at step S44), the processing returns to step S40. After executing the gesture command at step S45, the control unit 20 sets the vehicle-mounted device 10 to the state that both the input through the touch panel 18 and the input through the body shape input unit 40 are possible (at step S46).

As described above, in the vehicle-mounted device 10 according to this embodiment, the input through the body shape input unit 40 in accordance with the gesture input operation of the operator is associated with the gesture input to the touch panel 18. Hence, the vehicle-mounted device 10 can surely detect the gesture input operation performed by the operator, even if the hand shape (or finger shape), the action or the like of the operator has special or unique characteristics peculiar to the operator. In addition, the vehicle-mounted device 10 according to this embodiment can surely detect the gesture input operation performed by the operator, even if the vehicle-mounted device 10 does not have numerous data in consideration of the special or unique characteristics of the various hand shapes (or finger shapes) or actions of the operator. Furthermore, the gesture input operation according to this embodiment can be performed in a relaxed state that the operator is not required to largely extend his hand or to largely bend his upper body obliquely forward.

Although the present invention has been described in detail referring to the specific embodiment, it is obvious to those skilled in the art that various changes and modifications can be made without departing from the spirit and scope of the present invention.

This application is based on Japanese Patent Application (JP-2012-059286) filed on March 15, 2012, the contents of which are hereby incorporated by reference.

### Industrial Applicability

The gesture input operation processing device according to the present invention is useful as a vehicle-mounted device, such as a navigation device, capable of allowing gesture input operation even if the hand shape or action of the operator has special or unique characteristics peculiar to the operator.

### Description of Reference Numerals and Signs

- 10: vehicle-mounted device
- 11: storage unit
- 12: external input unit
- 13: speaker
- 17: image display unit
- 18: touch panel
- 20: control unit
- 22: DVD/CD drive
- 23: GPS receiver
- 24: vehicle speed sensor
- 25: gyroscope
- 40: body shape input unit
- 41: image data input through body shape input unit
- 50: armrest
- 60: operator's hand
- 61: operator's hand shape extracted from body shape input unit
- 70: positions on touch panel touched with fingers
- 71: gesture input
- 80: finger positions extracted from body shape input unit
- 81: time transition of finger positions extracted from body shape input unit

## Claims

1. A gesture input operation processing device comprising:
a touch panel, superposed on an image display unit for displaying an image, that detects a position touched by an operator;
a body shape input unit that captures a body shape of the operator as image data at the time when the operator performs gesture input operation;
a control unit that detects input operation performed by a non-contact gesture of the operator according to the image data captured by the body shape input unit, and detects a gesture input performed by the operator to the touch panel, and associates the input data through the body shape input unit with the input data through the touch panel; and
a storage unit that stores the association between the input data through the body shape input unit and the input data through the touch panel performed by the control unit and stores a type of a gesture.

2. The gesture input operation processing device according to claim 1, wherein the control unit associates a specific body shape of the operator with a specific gesture input and stores the specific body shape as a non-contact gesture start condition in the storage unit.

3. The gesture input operation processing device according to claim 1 or 2, wherein the body shape input unit is integrated with at least one of the touch panel, the control unit and the storage unit.

4. The gesture input operation processing device according to claim 1 or 2, wherein the body shape input unit is separated from at least one of the touch panel, the control unit and the storage unit.

5. The gesture input operation processing device according to claim 2, wherein the non-contact gesture start condition includes the number of fingers indicated by the body shape of the operator.

6. The gesture input operation processing device according to claim 5, wherein the non-contact gesture start condition includes a hand shape of the operator.
